# EUROPEAN PATENT SPECIFICATION

(11) **EP 4 190 837 B1**
(45) Date of publication and mention of the grant of the patent: **09.12.2026**
(21) Application number: 21849453.2
(22) Date of filing: 26.07.2021
(51) Int. Cl.: C08G 65/336, C08K 5/17, C08L 101/10

(54) **ORGANIC POLYMER, CURABLE COMPOSITION, AND CURED PRODUCT**
ORGANISCHES POLYMER, HÄRTBARE ZUSAMMENSETZUNG UND GEHÄRTETES PRODUKT
POLYMÈRE ORGANIQUE, COMPOSITION DURCISSABLE ET PRODUIT DURCI

(30) Priority: 27.07.2020 JP 2020126202
(43) Date of publication of application: 07.06.2023
(73) Proprietor: Kaneka Corporation, Osaka-shi, Osaka 530-8288 (JP)
(72) Inventor: AJIOKA, Naomi, Hyogo 676-8688 (JP); KUBOTA, Nodoka, Hyogo 676-8688 (JP); SAITO, Takahiro, Hyogo 676-8688 (JP)
(74) Representative: Vossius & Partner Patentanwälte Rechtsanwälte mbB
(86) International application number: PCT/JP2021/027551
(87) International publication number: WO 2022/024997

(56) References cited:
- EP-A1- 3 594 261
- CN-A- 1 690 063
- JP-A- 2002 155 091
- JP-A- 2007 051 122
- JP-A- 2014 156 418
- JP-A- 2018 009 086
- JP-A- 2020 114 905
- JP-A- H07 291 922
- JP-A- S55 129 446
- JP-A- S63 245 406

## Description

### Technical Field

The present invention relates to a curable composition comprising an organic polymer having a reactive silyl group, and a cured product.

### Background Art

An organic polymer that has a silicon-containing group having a hydroxy or hydrolyzable group on a silicon atom and capable of forming a siloxane bond (this silicon-containing group will be referred to as a "reactive silyl group" hereinafter) is known as a moisture-reactive polymer. This kind of organic polymers are contained in many industrial products such as adhesives, sealing materials, coating materials, paints, and pressure-sensitive adhesives and used in a wide variety of fields. Known examples of such reactive silyl group-containing polymers include various polymers having a polyoxyalkylene polymer backbone, a saturated hydrocarbon polymer backbone, or a (meth)acrylic ester polymer backbone.

An exemplary known method of producing a reactive silyl group-containing polymer is to synthesize a polyoxyalkylene polymer terminated by a hydroxy group through ring-opening polymerization of an epoxy compound, then convert the hydroxy group to a carbon-carbon double bond, and carry out a hydrosilylation reaction of the carbon-carbon double bond with a silane compound to introduce a reactive silyl group into the polymer (see Patent Literature 1, for example). However, the reactive silyl group-containing polymer obtained by this method does not necessarily has sufficient curability, and there is a demand for improvement in curability.

Patent Literature 2 discloses a reactive silyl group-containing polymer with improved curability. In the disclosed polymer, a reactive silyl group is bonded to the polymer backbone via a particular structure containing a sulfide bond (-S-). Patent Literature 3 relates to a particular ω-[2-(polyalkyleneoxy)ethylthio]alkylalkoxysilane derivative and a preparation method thereof.

### Citation List

### Patent Literature

PTL 1: Japanese Laid-Open Patent Application Publication No. S52-73998
PTL 2: Japanese Laid-Open Patent Application Publication No. 2017-141450
PTL 3: Japanese Laid-Open Patent Application Publication No. JP 2007 051122 A

### Summary of Invention

### Technical Problem

In view of the above circumstances, the present invention aims to provide a reactive silyl group-containing organic polymer having rapid-curing ability, a curable composition containing the polymer, and a cured product of the composition.

### Solution to Problem

As a result of intensive studies, the present inventors have found that bonding a reactive silyl group to a polymer backbone of an organic polymer via a particular structure leads to an improvement in curability of the organic polymer. Based on this finding, the inventors have arrived at the present invention.

Specifically, the present invention relates to a curable composition as defined in the claims.

The present invention further relates to a cured product obtained by curing the curable composition.

### Advantageous Effects of Invention

The present invention can provide a curable composition comprising a reactive silyl group-containing organic polymer having rapid-curing ability, and a cured product of the composition. As the reactive silyl group-containing organic polymer has rapid-curing ability, the curable composition containing the organic polymer can exhibit high curability even when the amount of an organotin compound used as a silanol condensation catalyst is reduced or when the silanol condensation catalyst used is a compound (e.g., an amine compound) which typically has lower activity than organotin compounds.

A preferred embodiment of the method of producing the reactive silyl group-containing organic polymer includes oxidizing a sulfide bond using an oxidant. This oxidation step can oxidize a raw material remaining unreacted or a by-product, thus removing a bad odor attributed to these compounds.

### Description of Embodiments

Hereinafter, embodiments of the present invention will be described in detail.

### (Organic Polymer)

The present invention relates to a curable composition comprising an organic polymer having a reactive silyl group. The organic polymer exhibits curability based on hydrolysis and dehydration condensation of the reactive silyl group.

The organic polymer has a polymer backbone composed of a plurality of repeating units and terminal structures bonded to ends of the polymer backbone. The "polymer backbone" refers to a polymer main chain composed of a plurality of repeating units, where the polymer backbone of the organic polymer is a polyoxyalkylene polymer. The polymer backbone of the organic polymer may be linear or branched. A linear polymer backbone is preferred in terms of high elongation of a cured product of a curable composition containing the organic polymer, and a branched polymer backbone is preferred in terms of high tensile strength of the cured product of the curable composition. The linear polymer backbone can be formed by using an initiator having two hydroxy groups in the molecule in a polymerization method for polymer backbone formation, while the branched polymer backbone can be formed by using an initiator having three or more hydroxy groups in the molecule.

The polymer backbone is preferably a polymer backbone consisting only of a plurality of repeating units linked to one another or a polymer backbone containing structures derived from the initiator used in polymerization in addition to the plurality of repeating units and consisting only of the plurality of repeating units and the initiator-derived structures. As the polymer backbone of the organic polymer is a polyoxyalkylene polymer, the "repeating unit" refers to an oxyalkylene unit, which is, for example, an oxyalkylene unit having 2 to 6 carbon atoms and preferably an oxyalkylene unit having 2 to 4 carbon atoms.

The "terminal structure" refers to a moiety that does not contain the repeating unit of the polymer backbone and that is bonded to an end of the polymer backbone. The terminal structure is preferably bonded via an oxygen atom to the oxyalkylene unit located at an end of the polymer backbone. The reactive silyl groups of the organic polymer are preferably contained in the terminal structures. In this case, every terminal structure may contain a reactive silyl group, or there may be both terminal structures that contain reactive silyl groups and terminal structures that do not contain any reactive silyl groups.

The organic polymer has a reactive silyl group-containing group represented by the following formula (1).

-S(O)_{b}-R²-SiR¹ₐX₃₋ₐ (1)

The organic polymer having a reactive silyl group-containing group represented by the formula (1) has rapid-curing ability. A possible reason for the rapid-curing ability is that the activity of the reactive silyl group is increased due to the strong electron-withdrawing action of the sulfinyl group (-S(O)-) or sulfonyl group (-S(O)₂-). Additionally, the -S(O) is charge-separated into -S⁺ and -O⁻, and the O⁻ is coordinated to the silicon atom of the reactive silyl group to form five-coordinate silicon. The formation of five-coordinate silicon also contributes to increasing the activity of the reactive silyl group, and this is another possible reason for the rapid-curing ability.

R¹ represents a substituted or unsubstituted monovalent hydrocarbon group having 1 to 20 carbon atoms. The number of carbon atoms is preferably from 1 to 10, more preferably from 1 to 8, even more preferably from 1 to 6, still even more preferably from 1 to 3, and particularly preferably 1 or 2. In the case where the hydrocarbon group has a substituent, examples of the substituent include, but are not limited to, halogen groups such as a chloro group, alkoxy groups such as a methoxy group, and amino groups such as a N,N-diethylamino group.

Examples of R¹ include: unsubstituted alkyl groups such as methyl, ethyl, n-propyl, isopropyl, n-butyl, tert-butyl, n-hexyl, 2-ethylhexyl, and n-dodecyl groups; substituted alkyl groups such as chloromethyl, methoxymethyl, and N,N-diethylaminomethyl groups; unsaturated hydrocarbon groups such as vinyl, isopropenyl, and allyl groups; cycloalkyl groups such as a cyclohexyl group; aryl groups such as phenyl, toluyl, and 1-naphthyl groups; and aralkyl groups such as a benzyl group. R¹ is preferably a substituted or unsubstituted alkyl group, more preferably a methyl group, an ethyl group, a chloromethyl group, or a methoxymethyl group, even more preferably a methyl group or a methoxymethyl group, and particularly preferably a methyl group. Only one group may be used as R¹, or two or more different groups may be used in combination as R¹.

R² represents a substituted or unsubstituted divalent hydrocarbon group having 1 to 20 carbon atoms. The number of carbon atoms is preferably from 1 to 10, more preferably from 1 to 8, even more preferably from 1 to 6, still even more preferably from 1 to 3, and most preferably 3. In the case where the number of carbon atoms in R² is 3, it is expected that O⁻ bonded to the sulfur atom is coordinated to the silicon atom of the reactive silyl group to form a stable six-membered ring structure. This leads to a significant increase in the activity of the reactive silyl group and hence high rapid-curing ability. In the case where the hydrocarbon group has a substituent, example of the substituent include, but are not limited to, halogen groups such as a chloro group, alkoxy groups such as a methoxy group, and amino groups such as a N,N-diethylamino group.

Examples of R² include: unsubstituted alkylene groups such as methylene, ethylene, n-propylene, isopropylene, n-butylene, tert-butylene, n-hexylene, 2-ethylhexylene, and n-dodecylene groups; substituted alkylene groups such as chloromethylene, methoxymethylene, and N,N-diethylaminomethylene groups; unsaturated hydrocarbon groups such as vinylene, isopropenylene, and allylene groups; cycloalkylene groups such as a cyclohexylene group; arylene groups such as phenylene, toluylene, and naphthylene groups; and aralkylene groups such as a benzylene group. R² is preferably a substituted or unsubstituted alkylene group, more preferably a methylene group, an ethylene group, or a propylene group, even more preferably a methylene group or a propylene group, and most preferably a propylene group. Only one group may be used as R², or two or more different groups may be used in combination as R².

X represents a hydroxy group or a hydrolyzable group. Examples of X include a hydroxy group, hydrogen, halogens, and alkoxy, acyloxy, ketoximate, amino, amide, acid amide, aminooxy, mercapto, and alkenyloxy groups. The alkoxy and other groups may have a substituent. The alkoxy groups are preferred in terms of moderate hydrolyzability and ease of handling. Methoxy, ethoxy, n-propoxy, and isopropoxy groups are more preferred, methoxy and ethoxy groups are even more preferred, and a methoxy group is particularly preferred. Only one group may be used as X, or two or more different groups may be used in combination as X.

In the formula (1), a is 0, 1, or 2. Preferably, a is 0 or 1. In terms of the balance between the curability of the organic polymer and the physical properties of the cured product, a is more preferably 1.

In the formula (1), b is 1 or 2. In order to achieve particularly high curability, b is preferably 2. In view of the balance between rapid-curing ability and storage stability, b is preferably 1. There may be both a group in which b is 1 (sulfinyl group) and a group in which b is 2 (sulfonyl group).

Examples of -SiR¹ₐX₃₋ₐ in the formula (1) include trimethoxysilyl, triethoxysilyl, tris(2-propenyloxy)silyl, triacetoxysilyl, methyldimethoxysilyl, methyldiethoxysilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups. Among these, methyldimethoxysilyl, trimethoxysilyl, triethoxysilyl, (chloromethyl)dimethoxysilyl, (methoxymethyl)dimethoxysilyl, (methoxymethyl)diethoxysilyl, and (N,N-diethylaminomethyl)dimethoxysilyl groups are preferred. In terms of reactivity, trimethoxysilyl, (chloromethyl)dimethoxysilyl, and (methoxymethyl)dimethoxysilyl groups are more preferred. In terms of stability, methyldimethoxysilyl, methyldiethoxysilyl, and triethoxysilyl groups are more preferred. Trimethoxysilyl, triethoxysilyl, and methyldimethoxysilyl groups are more preferred in terms of ease of production. Most preferred is a trimethoxysilyl group.

The number of reactive silyl groups in the organic polymer is preferably 0.5 or more, more preferably 1.0 or more, and even more preferably 1.2 or more on average per molecule of the organic polymer. As for the upper limit, the average number of reactive silyl groups is preferably 4 or less and more preferably 3 or less.

In the organic polymer, the reactive silyl group-containing terminal structure is not limited to a particular structure. A typical example of the reactive silyl group-containing terminal structure is that represented by the following formula (4).

-O-R³-CH(R⁴)-CH₂-S(O)_{b}-R²-SiR¹ₐX₃₋ₐ (4)

In the formula (4), R³ represents a direct bond or a divalent hydrocarbon group having 1 to 4 carbon atoms, and R⁴ represents hydrogen or an alkyl group having 1 to 6 carbon atoms. The leftmost oxygen is oxygen bonded to the polymer backbone. R¹, R², X, a, and b are as defined above for the formula (1).

R³ is preferably a divalent hydrocarbon group having 1 to 3 carbon atoms and more preferably a divalent hydrocarbon group having 1 to 2 carbon atoms. The hydrocarbon group is preferably an alkylene group, and methylene, ethylene, propylene, and butylene groups can be used. Particularly preferred is a methylene group.

R⁴ is preferably hydrogen or an alkyl group having 1 to 4 carbon atoms and more preferably hydrogen or an alkyl group having 1 to 3 carbon atoms. Examples of the alkyl group include hydrogen and methyl, ethyl, propyl, and butyl groups. Hydrogen, a methyl group, and an ethyl group are preferred, and hydrogen and a methyl group are more preferred.

### <Main Chain Structure>

The main chain structure of the organic polymer may be linear or branched. The organic polymer has a backbone that is a polyoxyalkylene polymer such as polyoxyethylene, polyoxypropylene, polyoxybutylene, polyoxytetramethylene, polyoxyethylene-polyoxypropylene copolymer, and polyoxypropylene-polyoxybutylene copolymer. Polymer backbones disclosed herein mer**e**ly for reference include saturated hydrocarbon polymers such as ethylene-propylene copolymer, polyisobutylene, copolymer of isobutylene with isoprene, polychloroprene, polyisoprene, copolymer of isoprene or butadiene with acrylonitrile and/or styrene, polybutadiene, copolymer of isoprene or butadiene with acrylonitrile and styrene, and hydrogenated polyolefin polymers resulting from hydrogenation of these polyolefin polymers; polyester polymers; vinyl polymers such as (meth)acrylic ester polymers resulting from radical polymerization of (meth)acrylic ester monomers such as ethyl (meth)acrylate and butyl (meth)acrylate, and polymers resulting from radical polymerization of monomers such as (meth)acrylic monomers, vinyl acetate, acrylonitrile, and styrene; graft polymers resulting from polymerization of vinyl monomers mentioned in the above polymers; polysulfide polymers; polyamide polymers; polycarbonate polymers; and diallyl phthalate polymers. Each of the polymers mentioned above may be present as a mixture of different forms of polymers such as block and graft polymers. Among the above polymers, the saturated hydrocarbon polymers, polyoxyalkylene polymers, and (meth)acrylic ester polymers have a relatively low glass transition temperature and the resulting cured product has high cold resistance. The polymer backbone of the organic polymer is preferably polyoxypropylene.

The organic polymer may be a polymer having any one of the various backbones mentioned above or a mixture of polymers having different ones of the above various blackbones, provided that the polymer backbone of an organic polymer is a polyoxyalkylene polymer. The mixture may be a mixture of polymers produced separately from each other or a mixture of polymers produced together so as to achieve given mix proportions.

The number-average molecular weight of the organic polymer is not limited to a particular range. The number-average molecular weight as determined by GPC analysis as a polystyrene equivalent molecular weight is preferably from 3,000 to 100,000, more preferably from 3,000 to 50,000, and even more preferably from 3,000 to 30,000. When the number-average molecular weight is 3,000 or more, the amount of the reactive silyl groups relative to the total polymer is in an appropriate range, and this is desirable in terms of production cost. When the number-average molecular weight is 100,000 or less, a viscosity desirable in terms of workability is likely to be achieved. The number-average molecular weight can be determined by GPC analysis as a polystyrene equivalent molecular weight.

The organic polymer is not limited to having a particular molecular weight distribution (Mw/Mn), but preferably has a narrow molecular weight distribution. To be specific, Mw/Mn is preferably less than 2.0, more preferably 1.6 or less, even more preferably 1.5 or less, and particularly preferably 1.4 or less. In order to improve the mechanical properties such as durability and elongation of the cured product, Mw/Mn is preferably 1.2 or less. The molecular weight distribution (Mw/Mn) can be calculated from the number-average and weight-average molecular weights determined by GPC analysis as polystyrene equivalent molecular weights.

### <Method of Producing Organic Polymer>

Hereinafter, the method of producing the organic polymer will be described. The production method is not limited to a particular technique. For example, the organic polymer can be produced as follows: carbon-carbon double bonds are introduced into a hydroxy group-containing organic polymer by utilizing the reactivity of the hydroxy groups; a compound having a reactive silyl group and a mercapto group is then reacted with the carbon-carbon double bonds to form sulfide bonds (-S-) and introduce reactive silyl groups; and finally the sulfide bonds are oxidized.

### (Polyoxyalkylene Polymer)

Hereinafter, an embodiment of the method of producing the organic polymer will be described in detail for the case where the polymer backbone of the organic polymer is a polyoxyalkylene polymer. It should be noted that the method of producing the organic polymer is not limited to that described below.

### (Polymerization)

The polymer backbone of the polyoxyalkylene polymer can be formed by polymerizing an epoxy compound with a hydroxy group-containing initiator using a conventionally-known method. This polymerization yields a hydroxy-terminated polyoxyalkylene polymer. The polymerization method is not limited to a particular technique. Polymerization using a double metal cyanide complex catalyst such as zinc hexacyanocobaltate-glyme complex is preferred because this polymerization can yield a hydroxy-terminated polymer having a narrow molecular weight distribution (small value of Mw/Mn).

Examples of the hydroxy group-containing initiator include, but are not limited to, organic compounds having one or more hydroxy groups, such as ethylene glycol, propylene glycol, glycerin, pentaerythritol, low-molecular-weight polyoxypropylene glycol, low-molecular-weight polyoxypropylene triol, allyl alcohol, low-molecular-weight polyoxypropylene monoallyl ether, and low-molecular-weight polyoxypropylene monoalkyl ether.

Examples of the epoxy compound include, but are not limited to, alkylene oxides such as ethylene oxide and propylene oxide and glycidyl ethers such as methyl glycidyl ether and butyl glycidyl ether. Propylene oxide is preferred.

### (Reaction with Alkali Metal Salt)

When introducing carbon-carbon double bonds into the hydroxy-terminated polyoxyalkylene polymer, it is preferable to first allow an alkali metal salt to act on the hydroxy-terminated polyoxyalkylene polymer to convert the terminal hydroxy groups to metaloxy groups. A double metal cyanide complex catalyst can be used instead of the alkali metal salt. The above reaction results in formation of a metaloxy-terminated polyoxyalkylene polymer.

Examples of the alkali metal salt include, but are not limited to, sodium hydroxide, sodium alkoxides, potassium hydroxide, potassium alkoxides, lithium hydroxide, lithium alkoxides, cesium hydroxide, and cesium alkoxides. In terms of ease of handling and solubility, sodium hydroxide, sodium methoxide, sodium ethoxide, sodium tert-butoxide, potassium hydroxide, potassium methoxide, potassium ethoxide, and potassium tert-butoxide are preferred, and sodium methoxide and sodium tert-butoxide are more preferred. Sodium methoxide is particularly preferred in terms of availability. In terms of reactivity, sodium tert-butoxide is particularly preferred. A solution of the alkali metal salt in a solvent may be used for the reaction.

The amount of the alkali metal salt used is not limited to a particular range. The molar ratio of the alkali metal salt to the hydroxy groups of the hydroxy-terminated polyoxyalkylene polymer is preferably 0.5 or more, more preferably 0.6 or more, even more preferably 0.7 or more, and still even more preferably 0.8 or more. The molar ratio is preferably 1.2 or less and more preferably 1.1 or less. When the amount of the alkali metal salt used is in the above range, the reaction of conversion of the hydroxy groups to metaloxy groups is likely to progress sufficiently, and the occurrence of a side reaction due to the alkali metal salt remaining as an impurity can be avoided.

The purpose of the use of the alkali metal salt is to convert the hydroxy groups of the hydroxy-terminated polyoxyalkylene polymer to metaloxy groups. To allow this conversion reaction to proceed efficiently, water and any hydroxy group-containing substance other than the polyoxyalkylene polymer are preferably removed beforehand from the reaction system. This removal can be accomplished using a conventionally-known method, examples of which include evaporation by heating, devolatilization under reduced pressure, spray vaporization, thin-film evaporation, and azeotropic devolatilization.

The temperature at which the alkali metal salt is allowed to act on the polymer can be set as appropriate by those skilled in the art. The temperature is preferably from 50 to 150°C and more preferably from 110 to 145°C. The time for which the alkali metal salt is allowed to act on the polymer is preferably from 10 minutes to 5 hours and more preferably from 30 minutes to 3 hours.

### (Reaction with Electrophile)

A carbon-carbon double bond-containing electrophile is allowed to act on the metaloxy-terminated polyoxyalkylene polymer obtained as above, and thus the metaloxy groups can be converted to carbon-carbon double bond-containing structures. This results in formation of a polyoxyalkylene polymer having carbon-carbon double bonds in terminal structures.

The carbon-carbon double bond-containing electrophile is not limited to a particular compound, and may be any compound capable of reacting with the metaloxy groups of the polyoxyalkylene polymer to introduce carbon-carbon double bonds into the polyoxyalkylene polymer. Examples of the electrophile include a carbon-carbon double bond-containing organic halide.

The carbon-carbon double bond-containing organic halide can undergo a substitution reaction of the halogen with the metaloxy groups to form ether bonds and introduce carbon-carbon double bond-containing terminal structures into the polyoxyalkylene polymer. The carbon-carbon double bond-containing organic halide can be represented by, but is not limited to, the following formula (3).

Z-R³-C(R⁴)=CH₂ (3)

In the formula (3), R³ and R⁴ are the same as R³ and R⁴ defined above for the formula (4), and Z represents a halogen atom. The polyoxyalkylene polymer resulting from the reaction with the organic halide and having carbon-carbon double bonds in terminal structures is subjected to reactive silyl group introduction described later. This can result in formation of the terminal structures represented by the formula (4).

Specific examples of the carbon-carbon double bond-containing organic halide include, but are not limited to, vinyl chloride, allyl chloride, methallyl chloride, vinyl bromide, allyl bromide, methallyl bromide, vinyl iodide, allyl iodide, and methallyl iodide. In terms of ease of handling, allyl chloride and methallyl chloride are preferred.

The amount of the carbon-carbon double bond-containing organic halide added is not limited to a particular range. The molar ratio of the organic halide to the hydroxy groups of the polyoxyalkylene polymer is preferably 0.7 or more and more preferably 1.0 or more. The molar ratio is preferably 5.0 or less and more preferably 2.0 or less.

The temperature at which the carbon-carbon double bond-containing organic halide is reacted with the metaloxy-terminated polyoxyalkylene polymer is preferably from 50 to 150°C and more preferably from 110 to 140°C. The reaction time is preferably from 10 minutes to 5 hours and more preferably from 30 minutes to 3 hours.

### (Reactive Silyl Group Introduction)

A compound having a reactive silyl group and a mercapto group in the molecule (this compound may be referred to as a "mercapto group-containing compound" hereinafter) is allowed to act on the polyoxyalkylene polymer obtained as described above and having carbon-carbon double bonds in terminal structures. This induces an addition reaction of the mercapto groups to the carbon-carbon double bonds, resulting in formation of sulfide bonds (-S-) and introduction of reactive silyl groups into the polymer. Thus, an organic polymer having a reactive silyl group-containing group represented by the following formula (2) can be produced.

-S-R²-SiR¹ₐX₃₋ₐ (2)

In the formula (2), R¹, R², X, and a are as defined above for the formula (1).

The mercapto group-containing compound can be represented by the following formula (5).

HS-R²-SiR¹ₐX₃₋ₐ (5)

In the formula (5), R¹, R², X, and a are as defined above for the formula (1). Specific examples of the mercapto group-containing compound include (3-mercaptopropyl)methyldimethoxysilane, (3-mercaptopropyl)trimethoxysilane, (3-mercaptopropyl)methyldiethoxysilane, (3-mercaptopropyl)triethoxysilane, (mercaptomethyl)methyldimethoxysilane, (mercaptomethyl)trimethoxysilane, (mercaptomethyl)methyldiethoxysilane, and (mercaptomethyl)triethoxysilane.

The amount of the mercapto group-containing compound used can be chosen as appropriate in view of the amount of the carbon-carbon double bonds of the polyoxyalkylene polymer. Specifically, the molar amount of the compound used is 0.3 or more times the molar amount of the carbon-carbon double bonds of the polyoxyalkylene polymer. In order to further increase the degree of reactive silyl group introduction, the molar amount of the compound used is preferably 0.6 or more times, more preferably 1.0 or more times, even more preferably 1.2 or more times, and particularly preferably more than 1.2 times the molar amount of the carbon-carbon double bonds of the polyoxyalkylene polymer. The upper limit of the amount of the mercapto group-containing compound used is not limited to a particular value. The molar amount of the compound used is preferably 3.0 or less times and more preferably 2.0 or less times the molar amount of the carbon-carbon double bonds of the polyoxyalkylene polymer. In terms of economy, the molar amount of the compound used is most preferably 1.2 or less times the molar amount of the carbon-carbon double bonds of the polyoxyalkylene polymer.

The addition reaction of the mercapto groups to the carbon-carbon double bonds may be carried out in the presence of a radical initiator in order to increase the reaction rate or reaction yield. The radical initiator used can be any conventionally-known radical initiator. Specific examples of the radical initiator include, but are not limited to, azo initiators and peroxide initiators.

Among known radical initiators, catalysts having low activity with reactive silyl groups are preferred. In this regard, azo initiators such as 2,2'-azobis(isobutyronitrile) (AIBN), 2,2'-azobis(2-methylbutyronitrile) (V-59), and 2,2'-azobis(1-methylcyclohexanecarbonitrile) (V-40) are particularly preferred.

The radical initiator may be added at one time to the reaction system containing the carbon-carbon double bond-containing organic polymer and the mercapto group-containing compound, but is preferably added to the reaction system in batches or continuously. Adding the radical initiator in batches or continuously can increase the degree of reactive silyl group introduction. When the radical initiator is added in batches, the addition is preferably conduced in two or more batches, more preferably in three or more batches, and even more preferably in four or more batches. It is desirable that the addition be conducted, for example, at intervals of 10 minutes or more and preferably at intervals of 30 minutes or more. When the radical initiator is added continuously, it is desirable that the addition be conducted, for example, over 1 hour or more and preferably over 2 hours or more. A solution of the radical initiator in an organic solvent may be added.

The total amount of the radical initiator used can be set as appropriate by those skilled in the art. In order to further increase the degree of reactive silyl group introduction, the total amount of the radical initiator is preferably from 0.05 to 10 parts by weight, more preferably from 0.1 to 5 parts by weight, and even more preferably from 0.2 to 3 parts by weight per 100 parts by weight of the organic polymer.

The temperature of the addition reaction can be set as appropriate by those skilled in the art. The reaction temperature is preferably from 50 to 120°C and more preferably from 70 to 100°C. The reaction time can also be set as appropriate. The reaction time is preferably adjusted along with the temperature condition to prevent the occurrence of an unintended condensation reaction between polymer molecules. To be specific, the reaction time is preferably from 15 minutes to 10 hours and more preferably from 30 minutes to 6 hours.

### (Sulfide Bond Oxidation)

Oxidation of sulfide bonds (-S-) of the organic polymer obtained as described above and having a reactive silyl group-containing group represented by the formula (2) can produce an organic polymer having a reactive silyl group-containing group represented by the formula (1).

The sulfide bond oxidation is preferably carried out using an oxidant. The oxidant is not limited to a particular type and can be selected as appropriate by those skilled in the art. Examples include the following oxides.
(a) Compounds containing heavy metal. Specific examples include: manganese dioxide; permanganates such as sodium permanganate and potassium permanganate; manganese salts such as manganese acetate, manganese sulfate, and manganese pyrophosphate; chromium trioxide; dichromates such as sodium dichromate, potassium dichromate, and ammonium dichromate; chromyl chloride; t-butyl chromate; chromyl acetate; lead tetraacetate; lead oxide; mercury acetate; mercury oxide; osmium tetroxide; ruthenium tetroxide; and selenium dioxide.
(b) Halogens and halogen-containing compounds. Specific examples include: halogens such as chlorine, bromine, and iodine; and interhalogen compounds such as chlorine fluoride, chlorine trifluoride, bromine trifluoride, bromine pentafluoride, bromine chloride, and iodine chloride.
(c) Compounds containing nitrogen oxide. Specific examples include: nitric acid; nitrates such as sodium nitrate, potassium nitrate, and ammonium nitrate; nitrites such as sodium nitrite and potassium nitrite; and nitrogen oxides such as dinitrogen oxide, dinitrogen trioxide, and nitrogen dioxide.
(d) Compounds containing halogen and oxygen atom. Specific examples include: chlorine dioxide; perhalogen acids such as perchloric acid and periodic acid; chlorates such as sodium chlorate, potassium chlorate, and ammonium chlorate; perchlorates such as sodium perchlorate, potassium perchlorate, and ammonium perchlorate; chlorites such as sodium chlorite and potassium chlorite; hypochlorites such as sodium hypochlorite and calcium hypochlorite; bromates such as sodium bromate and potassium bromate: iodates such as sodium iodate and potassium iodate; and periodates such as sodium periodate and potassium periodate.
(e) Metal peroxides. Specific examples include: alkali metal peroxides such as sodium peroxide and potassium peroxide; and alkaline-earth metal peroxides such as magnesium peroxide, calcium peroxide, and barium peroxide.
(f) Organic peroxides. Specific examples include: alkyl hydroperoxides such as t-butyl hydroperoxide and cumyl hydroperoxide; diacyl peroxides such as dibenzoyl peroxide, di-p-nitrobenzoyl peroxide, and di-p-chlorobenzoyl peroxide; organic peracids such as peracetic acid, trifluoroperacetic acid, perbenzoic acid, meta-chloroperbenzoic acid, monoperoxyphthalic acid, and performic acid; peresters such as t-butyl peracetate and t-butyl perbenzoate; dialkyl peroxides such as di-t-butyl peroxide; and cyclic peroxides such as dimethyldioxirane and methyltrifluoromethyldioxirane.
(g) Hydrogen peroxide and its derivatives. Specific examples of the derivatives include sodium percarbonate; perborates such as sodium perborate and potassium perborate; and urea peroxide. These derivatives release hydrogen peroxide when dissolved in water or decomposed by heat or any other cause.
(h) Oxygen and ozone. Other examples of the oxidant include: persulfates such as sodium persulfate, potassium persulfate, potassium hydrogen persulfate, and ammonium persulfate; potassium nitrosodisulfonate; trichloroisocyanuric acid; and bis(trimethylsilyl)peroxide.

Periodic acid or its salt is preferred as the oxidant in terms of the efficiency of the oxidation reaction and the stability of the organic polymer during the oxidation reaction, and a salt of periodic acid is particularly preferred. In terms of economy and post-oxidation process, oxygen or hydrogen peroxide is preferred. One oxidant may be used alone, or two or more oxidants may be used in combination.

The amount of the oxidant used can be set as appropriate in view of the amount of the sulfide bonds to be oxidized and the type of the oxidant. For example, the molar amount of the oxidant used may be from about 0.1 to about 5.0 times the molar amount of the sulfide bonds. Adjustment of the amount of the oxidant used leads to adjustment of the ratio between sulfinyl groups (-S(O)-) and sulfonyl groups (-S(O)₂-) contained in the organic polymer resulting from the oxidation.

When the oxidation is carried out using an oxidant, a solvent may or may not be used. The solvent is not limited to a particular type and can be selected as appropriate. Examples of the solvent include: alcohols such as methanol and ethanol; halogen-containing solvents such as chloroform and dichloroethane; and protic solvents such as acetonitrile, acetic acid, and water. The temperature and time of the oxidation reaction can be set as appropriate depending on factors such as the amount of the sulfide bonds to be oxidized and the type of the oxidant used.

During the oxidation of the sulfide bonds of the organic polymer, the mercapto group-containing compound remaining unreacted in the organic polymer and a by-product derived from the mercapto group-containing compound can also be oxidized. Thus, any sulfur compound-specific odor attributed to the unreacted compound or by-product can be removed from the organic polymer.

### ((Meth)acrylic Ester Polymer)

Examples of the method of producing the organic polymer whose main chain is a (meth)acrylic ester polymer include: (1) a method in which a compound having a polymerizable unsaturated group and a reactive functional group (examples of this compound include acrylic acid and 2-hydroxyethyl acrylate) is copolymerized with another monomer having a (meth)acrylic structure to give a polymer, then carbon-carbon double bonds are introduced at any positions of the polymer (preferably the ends of the molecular chain), subsequently the mercapto group-containing compound is added to the carbon-carbon double bonds, and finally the sulfide bonds are oxidized; and (II) a method in which a monomer having a (meth)acrylic structure is polymerized by a living radical polymerization process such as atom-transfer radical polymerization to give a polymer, then carbon-carbon double bonds are introduced at any positions of the polymer (preferably the ends of the molecular chain), subsequently the mercapto group-containing compound is added to the carbon-carbon double bonds, and finally the sulfide bonds are oxidized.

### (Saturated Hydrocarbon Polymer)

Examples of the method of producing the organic polymer whose main chain is a saturated hydrocarbon polymer include a method in which an olefin compound having 2 to 6 carbon atoms, such as ethylene, propylene, 1-butene, or isobutylene, is used as a main monomer and polymerized to give a polymer, then carbon-carbon doubles bonds are introduced at any positions of the polymer (preferably the ends of the molecular chain), subsequently the mercapto group-containing compound is added to the carbon-carbon double bonds, and finally the sulfide bonds are oxidized.

### <Curable Composition>

The present invention can provide a curable composition containing the organic polymer described above.

### (Silanol Condensation Catalyst)

The curable composition of the present invention preferably contains a silanol condensation catalyst for the purpose of accelerating the hydrolysis/condensation reaction of the reactive silyl groups, i.e., the curing reaction of the organic polymer.

The silanol condensation catalyst used can be a conventionally-known catalyst. Specifically, an organotin compound, a metal carboxylate, an amine compound, a carboxylic acid, an alkoxy metal, or an inorganic acid can be used as the silanol condensation catalyst.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), a reaction product of dibutyltin oxide and a silicate compound, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), and a reaction product of dioctyltin oxide and a silicate compound. Dioctyltin compounds are preferred in view of the recent increased awareness of environmental issues. As the organic polymer used in the present invention has rapid-curing ability, the curable composition of the present invention may be free of any organotin compound and contain a silanol condensation catalyst (in particular, an amine compound) which typically has lower activity than organotin compounds. The curable composition of the present invention can exhibit high curability even when containing an amine compound.

Specific examples of the metal carboxylate include tin carboxylate, bismuth carboxylate, titanium carboxylate, zirconium carboxylate, and iron carboxylate. The metal carboxylate may be a combination of any of the carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-o-tolylbiguanide, and 1-phenylbiguanide; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Examples of other silanol condensation catalysts that can be used include fluorine anion-containing compounds, photoacid generators, and photobase generators.

Two or more different silanol condensation catalysts may be used in combination. For example, a combined use of the amine compound and carboxylic acid as mentioned above can be expected to provide a reactivity-enhancing effect.

The reactive silyl group of the organic polymer used in the present invention has high activity. This renders it possible to reduce the amount of the silanol condensation catalyst, or use a low-activity silanol condensation catalyst, or use an aminosilane which is an amino group-containing silane coupling agent as a silanol condensation catalyst. Generally, aminosilanes are often added as adhesion promoters. Thus, with the use of an aminosilane as a silanol condensation catalyst, a curable composition that does not contain any commonly-used silanol condensation catalyst can be prepared. To this end, it is preferable not to add any silanol condensation catalyst other than aminosilanes. In particular, when the reactive silyl group contains a trimethoxysilyl or methoxymethyldimethoxysilyl group, the curable composition exhibits excellent curability even with the use of an aminosilane alone as the silanol condensation catalyst.

The amount of the silanol condensation catalyst used is preferably from 0.001 to 20 parts by weight, more preferably from 0.01 to 15 parts by weight, and particularly preferably from 0.01 to 10 parts by weight per 100 parts by weight of the organic polymer. If the amount of the silanol condensation catalyst used is below 0.001 parts by weight, the reaction rate could be insufficient. If the amount of the silanol condensation catalyst used is above 20 parts by weight, the workability of the composition tends to deteriorate because an extremely high reaction rate shortens the time during which the composition remains usable, and the storage stability of the composition also tends to deteriorate. A silanol condensation catalyst could, after curing of the curable composition, seep to the surface of the cured product or smear the surface of the cured product. An approach to this issue is to limit the amount of the silanol condensation catalyst used to the range of 0.01 to 3.0 parts by weight. Doing so allows for maintenance of a good surface condition of the cured product without sacrifice of curability.

Additional components may be added to the curable composition of the present invention, and examples of the additional components include a silicon compound, an adhesion promoter, a plasticizer, a solvent, a diluent, a silicate, a filler, an anti-sagging agent, an antioxidant, a light stabilizer, an ultraviolet absorber, a property modifier, a tackifying resin, an epoxy group-containing compound, a photocurable material, an oxygen-curable material, a surface modifier, an epoxy resin, another resin, a flame retardant, and a foaming agent. Further, various additives may be added, if desired, to the curable composition of the present invention in order to adjust the physical properties of the composition or the cured product of the composition. Examples of the additives include a curability modifier, a radical inhibitor, a metal deactivator, an antiozonant, a phosphorus-based peroxide decomposer, a lubricant, a pigment, and a fungicide.

### (Filler)

Various fillers can be contained in the curable composition of the present invention. Examples of the fillers include ground calcium carbonate, colloidal calcium carbonate, magnesium carbonate, diatomite, clay, talc, titanium oxide, fumed silica, precipitated silica, crystalline silica, molten silica, silicic anhydride, hydrated silicic acid, carbon black, ferric oxide, aluminum fines, zinc oxide, activated zinc oxide, PVC powder, PMMA powder, and glass fibers or filaments.

The amount of the filler used is preferably from 1 to 300 parts by weight and more preferably from 10 to 250 parts by weight per 100 parts by weight of the organic polymer used in the present invention.

An organic or inorganic balloon may be added to reduce the weight (or reduce the specific gravity) of the composition. The balloon is a spherical filler with a hollow interior, and examples of the material of the balloon include: inorganic materials such as glass, Shirasu soil, and silica; and organic materials such as phenol resin, urea resin, polystyrene, and Saran.

The amount of the balloon used is preferably from 0.1 to 100 parts by weight and more preferably from 1 to 20 parts by weight per 100 parts by weight of the organic polymer used in the present invention.

### (Adhesion Promoter)

An adhesion promoter can be added to the curable composition of the present invention. A silane coupling agent or a reaction product of the silane coupling agent can be added as the adhesion promoter.

Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. One of the above adhesion promoters may be used alone, or two or more thereof may be mixed and used.

The amount of the silane coupling agent used is preferably from 0.1 to 20 parts by weight and more preferably from 0.5 to 10 parts by weight per 100 parts by weight of the organic polymer used in the present invention.

### (Plasticizer)

A plasticizer can be added to the curable composition of the present invention. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as diisononyl 1,2-cyclohexanedicarboxylate; aliphatic polyfunctional carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic acid phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate.

A polymeric plasticizer can also be used. Specific examples of the polymeric plasticizer include: vinyl polymers; polyester plasticizers; polyethers such as polyether polyols (e.g., polyethylene glycol and polypropylene glycol having a number-average molecular weight of 500 or more) and derivatives resulting from conversion of the hydroxy groups of the polyether polyols to ester or ether groups; polystyrenes; polybutadiene; polybutene; polyisobutylene; butadiene-acrylonitrile; and polychloroprene. One plasticizer may be used alone, or two or more plasticizers may be used in combination.

The amount of the plasticizer used is preferably from 5 to 150 parts by weight, more preferably from 10 to 120 parts by weight, and even more preferably from 20 to 100 parts by weight per 100 parts by weight of the organic polymer used in the present invention.

### (Solvent and Diluent)

A solvent or diluent can be added to the curable composition of the present invention. The solvent or diluent used is not limited to a particular compound, and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One solvent or diluent may be used alone, or two or more solvents or diluents may be used in combination.

### (Anti-Sagging Agent)

An anti-sagging agent may be added, if desired, to the curable composition of the present invention to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the organic polymer used in the present invention.

### (Antioxidant)

An antioxidant (anti-aging agent) can be used in the curable composition of the present invention. The use of an antioxidant can increase the weathering resistance of the cured product. Examples of the antioxidant include hindered phenol antioxidants, monophenol antioxidants, bisphenol antioxidants, and polyphenol antioxidants. Specific examples of the antioxidant are described in Japanese Laid-Open Patent Application Publication No. H4-283259 and Japanese Laid-Open Patent Application Publication No. H9-194731.

The amount of the antioxidant used is preferably from 0.1 to 10 parts by weight and more preferably from 0.2 to 5 parts by weight per 100 parts by weight of the organic polymer used in the present invention.

### (Light Stabilizer)

A light stabilizer can be used in the curable composition of the present invention. The use of a light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the organic polymer used in the present invention.

### (Ultraviolet Absorber)

An ultraviolet absorber can be used in the curable composition of the present invention. The use of an ultraviolet absorber can increase the surface weathering resistance of the cured product. Examples of the ultraviolet absorber include benzophenone, benzotriazole, salicylate, substituted tolyl, and metal chelate compounds. Particularly preferred are benzotriazole compounds, examples of which include those sold under the trade names Tinuvin P, Tinuvin 213, Tinuvin 234, Tinuvin 326, Tinuvin 327, Tinuvin 328, Tinuvin 329, Tinuvin 571, Tinuvin 1600, and Tinuvin B75 (all of these are manufactured by BASF).

The amount of the ultraviolet absorber used is preferably from 0.1 to 10 parts by weight and more preferably from 0.2 to 5 parts by weight per 100 parts by weight of the organic polymer used in the present invention.

### (Property Modifier)

A property modifier may be added, if desired, to the curable composition of the present invention for the purpose of modifying the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition of the present invention or conversely decrease the hardness and increase the elongation at break. One property modifier may be used alone, or two or more property modifiers may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols.

The amount of the property modifier used is preferably from 0.1 to 10 parts by weight and more preferably from 0.5 to 5 parts by weight per 100 parts by weight of the organic polymer used in the present invention.

### <Tackifying Resin>

A tackifying resin can be added, if desired, to the curable composition of the present invention for the purpose of increasing the bond strength or adhesion to a substrate or any other purpose. The tackifying resin used is not limited to a particular resin, and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the organic polymer used in the present invention.

### <Epoxy Group-Containing Compound>

An epoxy group-containing compound can be used in the curable composition of the present invention. The use of an epoxy group-containing compound can improve the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended that the epoxy compound be used in an amount of 0.5 to 50 parts by weight per 100 parts by weight of the organic polymer used in the present invention.

### (Photocurable Material)

A photocurable material can be used in the curable composition of the present invention. The use of a photocurable material can lead to the formation of a coating of the photocurable material on the surface of the cured product, resulting in reduction in stickiness of the cured product or increase in weathering resistance of the cured product. A wide variety of such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

The amount of the photocurable material used is preferably from 0.1 to 20 parts by weight and more preferably from 0.5 to 10 parts by weight per 100 parts by weight of the organic polymer used in the present invention.

### <Oxygen-Curable Material>

An oxygen-curable material can be used in the curable composition of the present invention. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins resulting from modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

The amount of the oxygen-curable material is preferably used in an amount of 0.1 to 20 parts by weight, more preferably 0.5 to 10 parts by weight, per 100 parts by weight of the organic polymer used in the present invention. It is recommended that the oxygen-curable material be used in combination with a photocurable material as taught in Japanese Laid-Open Patent Application Publication No. H3-160053.

### <Epoxy Resin>

An epoxy resin can also be used in the curable composition of the present invention. The composition containing an added epoxy resin is suitable especially for use as an adhesive, in particular an adhesive for exterior wall tiles. Examples of the epoxy resin include bisphenol A epoxy resins and novolac epoxy resins.

As for the ratio between the epoxy resin used and the organic polymer used in the present invention, the organic polymer/epoxy resin weight ratio is preferably in the range of 100/1 to 1/100. If the organic polymer/epoxy resin weight ratio is below 1/100, the improving effect on the impact resistance and toughness of the epoxy resin cured product will be lessened. If the organic polymer/epoxy resin weight ratio is above 100/1, the strength of the polymer cured product will be insufficient.

When the epoxy resin is added to the curable composition of the present invention, a curing agent for curing the epoxy resin can also be used in the curable composition. The epoxy resin-curing agent used is not limited to a particular material, and may be a commonly used epoxy resin-curing agent.

When a curing agent for curing the epoxy resin is used, the amount of the curing agent is preferably from 0.1 to 300 parts by weight per 100 parts by weight of the epoxy resin.

### <<Preparation of Curable Composition>>

The curable composition of the present invention can be prepared as a one-part composition all the components of which are blended together and hermetically stored and which, when applied to any object, cures under the action of moisture in the air. The curable composition of the present invention can be prepared also as a two-part composition consisting of an organic polymer composition and a curing agent blend which is prepared separately from the organic polymer composition by blending components such as a silanol condensation catalyst, a filler, a plasticizer, and water. In the case of this two-part composition, the organic polymer composition and the blend are mixed before use. In terms of workability, the curable composition of the present invention is preferably prepared as a one-part composition.

In the case where the curable composition is a one-part composition, all the components are blended together beforehand. Thus, it is preferable that a water-containing component be dried to remove water before use or dehydrated by a manipulation such as pressure reduction during blending or kneading. The storage stability of the composition can be further improved by not only performing the drying/dehydration process but also adding an alkoxysilane compound such as n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

### <Applications>

The curable composition of the present invention can be used as a pressure-sensitive adhesive, a sealing material for use in buildings, ships, automobiles and roads, an adhesive, a waterproofing material, a waterproofing coating material, a mold making material, a vibration-isolating material, a vibration-damping material, a soundproofing material, a foam material, a paint, or a spray material. Since a cured product obtained by curing the curable composition of the present invention has excellent flexibility and adhesion, the curable composition is suitable for use as a sealing material or an adhesive.

The curable composition of the present invention can be used in diverse applications, including: a material for use in an electrical or electronic part, such as a sealant for the back side of a solar cell; an electrical insulating material of an electrical or electronic part or device, such as an insulating sheath material for an electric wire or cable; an acoustic insulating material; an elastic adhesive; a binder; a contact adhesive; a spray-type sealing material; a crack-repairing material; an adhesive for tile laying; an adhesive for an asphalt-waterproofing material; a powder paint; a cast molding material; a rubber material for medical purposes; a pressure-sensitive adhesive for medical purposes; a pressure-sensitive adhesive sheet for medical purposes; a medical device sealing material; a dental impression material; a food packaging material; a joint sealing material for exterior cladding such as siding board; a coating material; an anti-skid covering material; a buffer material; a primer; an electrically conductive material for electromagnetic wave shielding; a thermally conductive material; a hot-melt material; a potting agent for electrical or electronic purposes; a film; a gasket; a concrete-reinforcing material; an adhesive for temporary bonding; any kind of molding material; a rust-proofing or waterproofing sealant for an edge face (cut edge) of wire glass or laminated glass; and a liquid sealing material for use in industrial parts such as parts of automobiles, large vehicles (e.g., cargo trucks and buses), railroad cars, aircrafts, ships, electric machines, and various other mechanical machines. For example, in an automobile, the curable composition of the present invention can be used for diverse purposes, such as for adhesive mounting of various parts such as a plastic cover, a trim, a flange, a bumper, a window, and interior and exterior parts. Furthermore, the curable composition can, alone or with the help of a primer, adhere to a wide variety of substrates such as glass, porcelain, wood, metal, and a resin molded article, and thus can be used as any of various types of sealing compositions and adhesive compositions. Additionally, the curable composition of the present invention can be used as an adhesive for interior panels, an adhesive for exterior panels, an adhesive for tile laying, an adhesive for stone laying, an adhesive for ceiling finishing, an adhesive for floor finishing, an adhesive for wall finishing, an adhesive for vehicle panels, an adhesive for assembly of electrical, electronic, or precision equipment, an adhesive for bonding of leather, fiber products, fabric, paper, plates, or rubber, a reactive, postcuring pressure-sensitive adhesive, a sealing material for direct glazing, a sealing material for double-glazed glass, a sealing material for SSG, a sealing material for working joints of buildings, or a material for civil engineering or bridge construction. The curable composition can be used also as a pressure-sensitive adhesive material such as a pressure-sensitive adhesive tape or sheet.

### Examples

Hereinafter, the present invention will be described in more detail using examples. The present invention is not limited to the examples given below.

The number-average molecular weights in the examples are GPC molecular weights measured under the following conditions.
Delivery system: HLC-8420 GPC manufactured by Tosoh Corporation
Column: TSKgel Super H series manufactured by Tosoh Corporation
Solvent: THF
Molecular weight: Polystyrene equivalent
Measurement temperature: 40°C

The "degree of reactive silyl group introduction" was determined by subjecting the reactive silyl group-containing polyoxyalkylene polymer to ¹H NMR analysis and by making a calculation according to the following equation using integrals of signals representing the different groups of interest: 100 × [Number of moles of reactive silyl groups]/[Total number of moles of reactive silyl groups, groups (in the examples, allyl groups) at which reactive silyl groups are introducible but which remain without undergoing introduction of reactive silyl groups, and groups (in the examples, 1-propenyl groups) resulting from isomerization of groups at which reactive silyl groups are introducible].

### (Synthesis Example 1)

Propylene oxide was polymerized using a mixture of polyoxypropylene glycol having a number-average molecular weight of about 4,500 and polyoxypropylene triol having a number-average molecular weight of about 4,500 (polyoxypropylene glycol:polyoxypropylene triol weight ratio = 60:40) as an initiator in the presence of a zinc hexacyanocobaltate-glyme complex catalyst. This polymerization yielded hydroxy-terminated polyoxypropylene having a number-average molecular weight of 19,000.

Subsequently, 1.2 equivalents of sodium methoxide dissolved in methanol was added per equivalent of the hydroxy groups of the polyoxypropylene, and methanol was distilled off. This was followed by addition of 1.5 equivalents of 3-chloro-1 - propene to convert the terminal hydroxy groups to allyl groups. To the resulting unpurified allyl-terminated polyoxypropylene were added n-hexane and water, and the mixture was stirred and then centrifuged to remove water. Hexane was evaporated from the resulting hexane solution under reduced pressure, and thus the metal salt was removed from the polymer. In this manner, polyoxypropylene (A-1) having allyl groups in terminal moieties was obtained.

### (Synthesis Example 2)

A glass reactor equipped with a stirrer, a reflux condenser, and a thermometer was charged with 100 parts by weight of the polyoxypropylene (A-1) and 2.5 parts by weight of hexane, and azeotropic dehydration was carried out at 90°C. Hexane was distilled off under reduced pressure, and this was followed by nitrogen purging. While the temperature was held at 90°C, 3.4 parts by weight of 3-mercaptopropyltrimethoxysilane (the molar amount was 1.0 times that of the terminal allyl groups) and 0.1 parts by weight of 2,2'-azobis(2-methylbutyronitrile) serving as a radical initiator were added to initiate the reaction. At 1 hour, 2 hours, and 3 hours after the start of the reaction, 0.1 parts by weight of 2,2'-azobis(2-methylbutyronitrile) was added. That is, the initiator was added in four batches. At 4 hours after the start of the reaction, 3-mercaptopropyltrimethoxysilane remaining in the polymer and the by-product derived from 3-mercaptopropyltrimethoxysilane were distilled off at or above 130°C under reduced pressure. The reaction product thus obtained was polyoxypropylene (B-1) having some amount of sulfur compound-specific odor, having a number-average molecular weight of 19,000, and having a reactive silyl group linked to the polymer backbone via a sulfide bond (-S-)-containing structure. For this polymer, the degree of reactive silyl group introduction was 81%.

### (Example 1)

A glass reactor equipped with a stirrer and a thermometer was charged with 100 parts by weight of the polyoxypropylene (B-1), 3.3 parts by weight of sodium periodate (the molar amount was 1.1 times that of the sulfide bonds), and 100 parts by weight of methanol, and the reaction was initiated at room temperature. After 30 hours, a centrifuge was used to allow solids dispersed in the reaction solution to settle out. The supernatant was collected, and methanol remaining in the polymer was distilled off under reduced pressure. The reaction product thus obtained was polyoxypropylene (C-1) having no sulfur compound-specific odor, having a number-average molecular weight of 19,000, and having a reactive silyl group linked to the polymer backbone via a sulfinyl group (-S(O)-)-containing structure.

### (Example 2)

A glass reactor equipped with a stirrer, a reflux condenser, and a thermometer was charged with 100 parts by weight of the polyoxypropylene (B-1), 6.6 parts by weight of sodium periodate (the molar amount was 2.2 times that of the sulfide bonds), and 100 parts by weight of methanol, and the mixture was stirred to initiate the reaction at room temperature. After 21 hours, the reaction temperature was increased to 65°C. After another 9 hours, the reaction solution was centrifuged to allow solids dispersed in the reaction system to settle out, and the supernatant was collected. Methanol remaining in the polymer was distilled off under reduced pressure. The reaction product thus obtained was polyoxypropylene (D-1) having no sulfur compound-specific odor, having a number-average molecular weight of 19,000, and having a reactive silyl group linked to the polymer backbone via a sulfinyl group (-S(O)-)- or sulfonyl group (-S(O)₂-)-containing structure. In the polyoxypropylene (D-1), the sulfinyl group:sulfonyl group ratio was about 3:5.

### (Synthesis Example 3)

Propylene oxide was polymerized using polyoxypropylene diol having a number-average molecular weight of about 4,500 as an initiator in the presence of a zinc hexacyanocobaltate-glyme complex catalyst. This polymerization yielded hydroxy-terminated polyoxypropylene having a number-average molecular weight of 15,000.

Subsequently, 1.2 equivalents of sodium methoxide dissolved in methanol was added per equivalent of the hydroxy groups of the polyoxypropylene, and methanol was distilled off. This was followed by addition of 1.5 equivalents of 3-chloro-1-propene to convert the terminal hydroxy groups to allyl groups. To the resulting unpurified allyl-terminated polyoxypropylene were added n-hexane and water, and the mixture was stirred and then centrifuged to remove water. Hexane was evaporated from the resulting hexane solution under reduced pressure, and thus the metal salt was removed from the polymer. In this manner, polyoxypropylene (A-2) having allyl groups in terminal moieties was obtained.

### (Synthesis Example 4)

A glass reactor equipped with a stirrer, a reflux condenser, and a thermometer was charged with 100 parts by weight of the polyoxypropylene (A-2) and 2.5 parts by weight of hexane, and azeotropic dehydration was carried out at 90°C. Hexane was distilled off under reduced pressure, and this was followed by nitrogen purging. While the temperature was held at 90°C, 6.7 parts by weight of 3-mercaptopropyl(dimethoxy)methylsilane (the molar amount was 1.7 times that of the terminal allyl groups) and 0.1 parts by weight of 2,2'-azobis(2-methylbutyronitrile) serving as a radical initiator were added to initiate the reaction. At 1 hour, 2 hours, and 3 hours after the start of the reaction, 0.1 parts by weight of 2,2'-azobis(2-methylbutyronitrile) was added. That is, the initiator was added in four batches. At 4 hours after the start of the reaction, 3-mercaptopropyl(dimethoxy)methylsilane remaining in the polymer and the by-product derived from 3-mercaptopropyl(dimethoxy)methylsilane were distilled off at or above 130°C under reduced pressure. The reaction product thus obtained was polyoxypropylene (B-2) having some amount of sulfur compound-specific odor, having a number-average molecular weight of 15,000, and having a reactive silyl group linked to the polymer backbone via a sulfide bond (-S-)-containing structure. For this polymer, the degree of reactive silyl group introduction was more than 99%.

### (Example 3)

A glass reactor equipped with a stirrer and a thermometer was charged with 100 parts by weight of the polyoxypropylene (B-2), 5.28 parts by weight of sodium periodate (the molar amount was 1.10 times that of the sulfide bonds), and 100 parts by weight of methanol, and the reaction was initiated at room temperature. After 30 hours, a centrifuge was used to allow solids dispersed in the reaction solution to settle out. The supernatant was collected, and methanol remaining in the polymer was distilled off under reduced pressure. The reaction product thus obtained was polyoxypropylene (C-2) having no sulfur compound-specific odor, having a number-average molecular weight of 15,000, and having a reactive silyl group linked to the polymer backbone via a sulfinyl group (-S(O)-)-containing structure.

### (Example 4)

A glass reactor equipped with a stirrer and a thermometer was charged with 100 parts by weight of the polyoxypropylene (B-2), 10.45 parts by weight of sodium periodate (the molar amount was 2.20 times that of the sulfide bonds), and 100 parts by weight of methanol, and the mixture was stirred to initiate the reaction at room temperature. After 21 hours, the reaction temperature was increased to 65°C. After another 9 hours, the reaction solution was centrifuged to allow solids dispersed in the reaction system to settle out, and the supernatant was collected. Methanol remaining in the polymer was distilled off under reduced pressure. The reaction product thus obtained was polyoxypropylene (D-2) having no sulfur compound-specific odor and having a reactive silyl group linked to the polymer backbone via a sulfinyl group (-S(O)-)- or sulfonyl group (-S(O)₂-)-containing structure. In the polyoxypropylene (D-2), the sulfinyl group:sulfonyl group ratio was about 1:1.

### (Synthesis Example 5)

A glass reactor equipped with a stirrer, a reflux condenser, and a thermometer was charged with 100 parts by weight of the polyoxypropylene (A-1) and 2.5 parts by weight of hexane, and azeotropic dehydration was carried out at 90°C. Hexane was distilled off under reduced pressure, and this was followed by nitrogen purging. While the temperature was held at 90°C, 2.6 parts by weight of 3-mercaptopropyl(dimethoxy)methylsilane (the molar amount was 0.9 times that of the terminal allyl groups) and 0.1 parts by weight of 2,2'-azobis(2-methylbutyronitrile) serving as a radical initiator were added to initiate the reaction. At 1 hour, 2 hours, and 3 hours after the start of the reaction, 0.1 parts by weight of 2,2'-azobis(2-methylbutyronitrile) was added. That is, the initiator was added in four batches. At 4 hours after the start of the reaction, 3-mercaptopropyl(dimethoxy)methylsilane remaining in the polymer and the by-product derived from 3-mercaptopropyl(dimethoxy)methylsilane were distilled off at or above 130°C under reduced pressure. The reaction product thus obtained was polyoxypropylene (B-3) having some amount of sulfur compound-specific odor, having a number-average molecular weight of 19,000, and having a reactive silyl group linked to the polymer backbone via a sulfide bond (-S-)-containing structure. For this polymer, the degree of reactive silyl group introduction was 70%.

### (Example 5)

A glass reactor equipped with a stirrer and a thermometer was charged with 100 parts by weight of the polyoxypropylene (B-3), 2.8 parts by weight of sodium periodate (the molar amount was 1.1 times that of the sulfide bonds), and 100 parts by weight of methanol, and the reaction was initiated at room temperature. After 30 hours, a centrifuge was used to allow solids dispersed in the reaction solution to settle out. The supernatant was collected, and methanol remaining in the polymer was distilled off under reduced pressure. The reaction product thus obtained was polyoxypropylene (C-3) having no sulfur compound-specific odor, having a number-average molecular weight of 19,000, and having a reactive silyl group linked to the polymer backbone via a sulfinyl group (-S(O)-)-containing structure.

### (Synthesis Example 6)

A glass reactor equipped with a stirrer, a reflux condenser, and a thermometer was charged with 100 parts by weight of the polyoxypropylene (A-1) and 2.5 parts by weight of hexane, and azeotropic dehydration was carried out at 90°C. Hexane was distilled off under reduced pressure, and this was followed by nitrogen purging. While the temperature was held at 90°C, 2.7 parts by weight of 3-mercaptopropyltrimethoxysilane (the molar amount was 0.8 times that of the terminal allyl groups) and 0.1 parts by weight of 2,2'-azobis(2-methylbutyronitrile) serving as a radical initiator were added to initiate the reaction. At 1 hour, 2 hours, and 3 hours after the start of the reaction, 0.1 parts by weight of 2,2'-azobis(2-methylbutyronitrile) was added. That is, the initiator was added in four batches. At 4 hours after the start of the reaction, 3-mercaptopropyltrimethoxysilane remaining in the polymer and the by-product derived from 3-mercaptopropyltrimethoxysilane were distilled off at or above 130°C under reduced pressure. The reaction product thus obtained was polyoxypropylene (B-4) having some amount of sulfur compound-specific odor, having a number-average molecular weight of 19,000, and having a reactive silyl group linked to the polymer backbone via a sulfide bond (-S-)-containing structure. For this polymer, the degree of reactive silyl group introduction was 68%.

### (Example 6)

A glass reactor equipped with a stirrer and a thermometer was charged with 100 parts by weight of the polyoxypropylene (B-4), 2.8 parts by weight of sodium periodate (the molar amount was 1.1 times that of the sulfide bonds), and 100 parts by weight of methanol, and the reaction was initiated at room temperature. After 30 hours, a centrifuge was used to allow solids dispersed in the reaction solution to settle out. The supernatant was collected, and methanol remaining in the polymer was distilled off under reduced pressure. The reaction product thus obtained was polyoxypropylene (C-4) having no sulfur compound-specific odor, having a number-average molecular weight of 19,000, and having a reactive silyl group linked to the polymer backbone via a sulfinyl group (-S(O)-)-containing structure.

### (Comparative Examples 1 to 6 and Examples 6 to 13)

### (Evaluation Method of Skinning Time)

Each of the polymers obtained as above was used to prepare a curable composition according to the component proportions shown in Table 1, and the curability of the composition was evaluated. The polymer was weighed into a small cup, and the silanol condensation catalyst listed in the table was added to the polymer. The mixture was kneaded/stirred and then allowed to stand at a constant temperature of 23°C and a constant humidity of 50%. The moment at which the standing was started was defined as the curing onset time point. The time taken for the mixture to become non-sticky to a spatula was measured as the skinning time to evaluate the curability. The results are shown in Table 1.

### (Silanol Condensation Catalyst)

DBU: 1,8-Diazabicyclo[5,4,0]undec-7-ene (manufactured by Tokyo Chemical Industry Co., Ltd.)
KBM-903: 3-Aminopropyltrimethoxysilane (manufactured by Shin-Etsu Chemical Co., Ltd.)
A-1120: N-(β-Aminoethyl)- γ-aminopropyltrimethoxysilane (manufactured by Momentive Performance Materials)
U-810: Dioctyltin dilaurate (manufactured by Nitto Kasei Co., Ltd.)

**[Table 1]**

| | | Comp. Example 1 | Example 6 | Example 7 | Comp. Example 2 | Example 8 | Example 9 | Comp. Example 3 | Example 10 | Comp. Example 4 | Example 11 | Comp. Example 5 | Example 12 | Comp. Example 6 | Example 13 |
|---|---|---|---|---|---|---|---|---|---|---|---|---|---|---|---|
| Polymer | B-1 | 100 | | | | | | | | 100 | | 100 | | 100 | |
| | C-1 | | 100 | | | | | | | | 100 | | 100 | | 100 |
| | D-1 | | | 100 | | | | | | | | | | | |
| | B-2 | | | | 100 | | | | | | | | | | |
| | C-2 | | | | | 100 | | | | | | | | | |
| | D-2 | | | | | | 100 | | | | | | | | |
| | B-3 | | | | | | | 100 | | | | | | | |
| | C-3 | | | | | | | | 100 | | | | | | |
| Silanol condensation catalyst | DBU | 0.2 | 0.2 | 0.2 | 0.2 | 0.2 | 0.2 | 0.2 | 0.2 | | | | | | |
| | KBM-903 | | | | | | | | | 3 | 3 | | | | |
| | A-1120 | | | | | | | | | | | 3 | 3 | | |
| | U-810 | | | | | | | | | | | | | 3 | 3 |
| Skinning time | | 75 min | 9 min | < 1 min | 4 days | 15 hr | 7 hr | 5 days | 15 hr | 2 days | 45 min | 4 days | 90 min | 85 min | 37 min |
| Odor | | Odorous | Non-odorous | Non-odorous | Odorous | Non-odorous | Non-odorous | Odorous | Non-odorous | Odorous | Non-odorous | Odorous | Non-odorous | Odorous | Non-odorous |

Table 1 reveals that as compared with Comparative Example 1 in which the polyoxypropylene (B-1) having a reactive silyl group linked to the polymer backbone via a sulfide bond (-S-)-containing structure was used, Example 6 in which the polyoxypropylene (C-1) resulting from oxidation of the sulfide bonds into sulfinyl groups (-S(O)-) was used exhibited higher curability, and Example 7 in which the polyoxypropylene (D-1) resulting from oxidation of the sulfide bonds into sulfinyl groups (-S(O)-) or sulfonyl groups (-S(O)₂-) was used exhibited much higher curability.

The same applies to comparison between Comparative Example 2 and Example 8 or 9, comparison between Comparative Example 3 and Example 10, comparison between Comparative Example 4 and Example 11, comparison between Comparative Example 5 and Example 12, and comparison between Comparative Example 6 and Example 13.

Furthermore, while the sulfide bond-containing polymers used in Comparative Examples had a sulfur compound-specific odor, the sulfide bond-oxidized polymers used in Examples were free of any sulfur compound-specific odor.

### (Comparative Example 7 and Example 14)

### (Evaluation Method of Dumbbell Tensile Property)

To 100 parts by weight of the polymer (B-1) obtained in Synthesis Example 2 or the polymer (C-1) obtained in Example 1 were added 3.0 parts by weight of tin octylate, 0.5 parts by weight of laurylamine, and 0.6 parts by weight of water, and they were stirred to give a uniform mixture, which was centrifugally defoamed. A mold frame made of polyethylene was filled with the mixture in such a manner as to avoid formation of bubbles in the mixture, and the mixture was aged at 23°C and 50%RH for 1 hour and then at 70°C for 20 hours to prepare a sheet with a thickness of about 3 mm. The sheet was punched to give a No. 3 dumbbell-shaped specimen, which was subjected to tensile strength testing at 23°C and 50%RH to measure modulus at 30% elongation (M30). The measurement of the tensile strength was carried out using Autograph (Shimadzu Corporation, AGS-J) at a tensile speed of 200 mm/min. The results are shown in Table 2.

**[Table 2]**

| | Comp. Example 7 | Example 14 |
|---|---|---|
| Polymer | B-1 | C-1 |
| Dumbbell tensile property M30 (MPa) | 0.24 | 0.24 |

Table 2 reveals that as compared with the sheet of Comparative Example 7 which was obtained through curing of the polyoxypropylene (B-1) having a reactive silyl group linked to the polymer backbone via a sulfide bond (-S-)-containing structure, the sheet of Example 14 which was obtained through curing of the polyoxypropylene (C-1) resulting from oxidation of the sulfide bonds into sulfinyl groups (-S(O)-) exhibited a similar level of tensile strength.

### (Comparative Examples 8 and 9 and Examples 15 to 17)

To 100 parts by weight of the polymer (B-4) or (C-4) were added 90 parts by weight of DINP (manufactured by J-PLUS Co., Ltd: diisononyl phthalate), 160 parts by weight of HAKUENKA CCR-S10 (manufactured by Shiraishi Calcium Kaisha, Ltd.: precipitated calcium carbonate), 54 parts by weight of ImerSeal 36S (manufactured by Imerys Carbonates: ground calcium carbonate), 5 parts by weight of RFK-2 (manufactured by Venator Materials: titanium oxide), 5 parts by weight of Crayvallac SLX (manufactured by Arkema), 1 part by weight of Irganox 1010 (manufactured by BASF: pentaerythritol tetrakis(3-(3,5-di-t-butyl-4-hydroxyphenyl)propionate)), and given amounts (shown in Table 3) of stabilizers, and the added components were uniformly dispersed in the polymer by means of a three-roll mill. Subsequently, DBU, A-171 (manufactured by Momentive Performance Materials: vinyltrimethoxysilane), and A-1110 (manufactured by Momentive Performance Materials: γ-aminopropyltrimethoxysilane) were added in the amounts shown in Table 3, and this was followed by kneading/stirring to give a curable composition.

### (Evaluation Method of Skinning Time)

At a temperature of 23°C and a relative humidity of 50%, an about 5-mm-thick mold frame was filled with the curable composition using a spatula, and the outer surface of the composition was flattened. The moment at which the surface flattening was completed was defined as the curing onset time point. The time taken for the composition to become non-sticky to the spatula touching the outer surface of the composition was determined as the skinning time. The results are shown in Table 3.

### (Evaluation Method of Dumbbell Tensile Property)

A mold frame was filled with the curable composition, which was aged at a temperature of 23°C and a relative humidity of 50% for 3 days and then at 50°C for 4 days to prepare a sheet-shaped cured product with a thickness of about 3 mm. The sheet-shaped cured product was punched to give a No. 3 dumbbell-shaped specimen, which was subjected to tensile strength testing at a temperature of 23°C and a relative humidity of 50% to measure modulus at 100% elongation (M100). The testing was carried out using Autograph manufactured by Shimadzu Corporation (AGS-J) at a tensile speed of 200 mm/min. The results are shown in Table 3.

**[Table 3]**

| | | Comp. Example 8 | Example 15 | Comp. Example 9 | Example 16 | Example 17 |
|---|---|---|---|---|---|---|
| Polymer | B-4 | 100 | | 100 | | |
| | C-4 | | 100 | | 100 | 100 |
| Plasticizer | DINP | 90 | 90 | 90 | 90 | 90 |
| Filler | HAKUENKA CCR-S10 | 160 | 160 | 160 | 160 | 160 |
| | Imerseal 36S | 54 | 54 | 54 | 54 | 54 |
| Titanium oxide | RFK-2 | 5 | 5 | 5 | 5 | 5 |
| Thixotropy-imparting agent | Crayvallac SLX | 5 | 5 | 5 | 5 | 5 |
| Stabilizer | Tinuvin 326 | 1 | 1 | | | |
| | Tinuvin 571 | | | | | 1 |
| | Tinuvin 1600 | | | 1 | 1 | |
| | Tinuvin 770 | 1 | 1 | 1 | 1 | |
| | Tinuvin 765 | | | | | 1 |
| Antioxidant | Irganox 1010 | 1 | 1 | 1 | 1 | 1 |
| Dehydrating agent | A-171 | 3 | 3 | 3 | 3 | 3 |
| Silanol condensation catalyst | A-1110 (silane coupling agent) | 3 | 3 | 3 | 3 | 3 |
| | DBU | 0.2 | 0.2 | 0.2 | | |
| Skinning time | | 6.6 hr | 27 min | 6.3 hr | 3.5 hr | 3.4 hr |
| Dumbbell tensile property M100 (MPa) | | 0.86 | 0.80 | 0.88 | 0.91 | 0.91 |
| Odor | | Odorous | Non-odorous | Odorous | Non-odorous | Non-odorous |

Table 3 reveals that as compared with Comparative Example 8 in which the polyoxypropylene (B-4) having a reactive silyl group linked to the polymer backbone via a sulfide bond (-S-)-containing structure was used, Example 15 in which the polyoxypropylene (C-4) resulting from oxidation of the sulfide bonds into sulfinyl groups (-S(O)-) was used exhibited a similar level of tensile strength and exhibited higher curability.

Examples 16 to 17 were systems in which the silanol condensation catalyst used did not include any organotin compound but an amino group-containing silane coupling agent (aminosilane) alone. Comparative Example 9 was a system in which an amino group-containing silane coupling agent and DBU were used in combination. It is seen that as compared with Comparative Example 9 in which the sulfide bond-containing polyoxypropylene (B-4) was used, Example 16 in which the sulfinyl group-containing polyoxypropylene (C-4) was used exhibited a similar level of tensile strength, and exhibited higher curability despite the silanol condensation catalyst including an aminosilane alone. Example 17, in which the stabilizers were different from those in Example 16, yielded similar results to Example 16.

Furthermore, while the sulfide bond-containing polymers used in Comparative Examples had a sulfur compound-specific odor, the sulfide bond-oxidized polymers used in Examples were free of any sulfur compound-specific odor.

## Claims

1. A curable composition comprising an organic polymer comprising a reactive silyl group-containing group represented by the following formula (1):
-S(O)_{b}-R²-SiR¹ₐX₃₋ₐ (1),
wherein: R¹ represents a substituted or unsubstituted monovalent hydrocarbon group having 1 to 20 carbon atoms; R² represents a substituted or unsubstituted divalent hydrocarbon group having 1 to 20 carbon atoms; X represents a hydroxy group or a hydrolyzable group; a is 0, 1, or 2; when there are two or more R¹ or X groups, the R¹ or X groups may be the same or different; and b is 1 or 2,
wherein a polymer backbone of the organic polymer is a polyoxyalkylene polymer.

2. The curable composition according to claim 1 or 2, wherein R² represents a substituted or unsubstituted divalent hydrocarbon group having 1 to 3 carbon atoms.

3. The curable composition according to claim 1 or 2, wherein R² represents a substituted or unsubstituted divalent hydrocarbon group having three carbon atoms.

4. The curable composition according to any one of claims 1 to 3, further comprising a silanol condensation catalyst.

5. The curable composition according to claim 4, wherein the silanol condensation catalyst is an amine compound or an amino group-containing silane coupling agent.

6. A cured product obtained by curing the curable composition according to any one of claims 1 to 5.

## Patentansprüche

1. Eine härtbare Zusammensetzung, umfassend ein organisches Polymer, umfassend eine reaktive Gruppe, die eine Silylgruppe enthält, die durch die folgende Formel (1) dargestellt wird:
-S(O)_{b}-R²-SiR¹ₐX₃₋ₐ (1),
wobei: R¹ eine substituierte oder unsubstituierte einwertige Kohlenwasserstoffgruppe mit 1 bis 20 Kohlenstoffatomen darstellt; R² eine substituierte oder unsubstituierte zweiwertige Kohlenwasserstoffgruppe mit 1 bis 20 Kohlenstoffatomen darstellt; X eine Hydroxygruppe oder eine hydrolysierbare Gruppe darstellt; a 0, 1 oder 2 ist; wenn zwei oder mehr R¹- oder X-Gruppen vorhanden sind, die R¹- oder X-Gruppen gleich oder verschieden sein können; und b 1 oder 2 ist,
wobei das Polymergerüst des organischen Polymers ein Polyoxyalkylenpolymer ist.

2. Die härtbare Zusammensetzung gemäß Anspruch 1 oder 2, wobei R² eine substituierte oder unsubstituierte zweiwertige Kohlenwasserstoffgruppe mit 1 bis 3 Kohlenstoffatomen darstellt.

3. Die härtbare Zusammensetzung gemäß Anspruch 1 oder 2, wobei R² eine substituierte oder unsubstituierte zweiwertige Kohlenwasserstoffgruppe mit drei Kohlenstoffatomen darstellt.

4. Die härtbare Zusammensetzung gemäß einem der Ansprüche 1 bis 3, die ferner einen Silanol-Kondensationskatalysator enthält.

5. Die härtbare Zusammensetzung gemäß Anspruch 4, wobei der Silanol-Kondensationskatalysator eine Aminverbindung oder ein ein Amingruppe(n) enthaltender Silan-Haftvermittler ist.

6. Ein gehärtetes Produkt, das durch Härten der härtbaren Zusammensetzung gemäß einem der Ansprüche 1 bis 5 erhalten wird.

## Revendications

1. Composition durcissable comprenant un polymère organique comprenant un groupe contenant un groupe silyle réactif représenté par la formule (1) suivante :
-S(O)_{b}-R²-SiR¹ₐX₃₋ₐ (1),
dans laquelle : R¹ représente un groupe hydrocarboné monovalent substitué ou non substitué ayant 1 à 20 atomes de carbone ; R² représente un groupe hydrocarboné divalent substitué ou non substitué ayant 1 à 20 atomes de carbone ; X représente un groupe hydroxy ou un groupe hydrolysable ; a vaut 0, 1, ou 2 ; lorsqu'il existe deux groupes R¹ ou X ou plus, les groupes R¹ ou X peuvent être identiques ou différents ; et b vaut 1 ou 2,
dans laquelle le squelette polymère du polymère organique est un polymère de polyoxyalkylène.

2. Composition durcissable selon la revendication 1 ou 2, dans laquelle R² représente un groupe hydrocarboné divalent substitué ou non substitué ayant 1 à 3 atomes de carbone.

3. Composition durcissable selon la revendication 1 ou 2, dans laquelle R² représente un groupe hydrocarboné divalent substitué ou non substitué ayant trois atomes de carbone.

4. Composition durcissable selon l'une quelconque des revendications 1 à 3, comprenant en outre un catalyseur de condensation de silanol.

5. Composition durcissable selon la revendication 4, dans laquelle le catalyseur de condensation de silanol est un composé amine ou un agent de couplage de silane contenant un groupe amino.

6. Produit durci obtenu par durcissement de la composition durcissable selon l'une quelconque des revendications 1 à 5.
